# EUROPEAN PATENT APPLICATION

(11) **EP 2 072 122 A1**
(43) Date of publication of application: **24.06.2009**
(21) Application number: 07805992.0
(22) Date of filing: 23.08.2007
(51) Int. Cl.: B01J 27/053, B01D 53/94, B01J 35/10, B01J 37/03, C01G 25/02

(54) **COMPLEX OXIDE AND METHOD FOR PRODUCING THE SAME, AND CATALYST, METHOD AND APPARATUS FOR PURIFYING NITROGEN OXIDE**

(30) Priority: 25.08.2006 JP 2006229328
(71) Applicant: Tokyo Roki Co. Ltd., Tsuzuki-ku Yokohama-shi, Kanagawa 224-0041 (JP); Daiichi Kigenso Kagaku Kogyo Co., Ltd., Osaka-shi, Osaka 559-0025 (JP)
(72) Inventor: MORI, Takayuki, Yokohama-shi, Kanagawa 224-0041 (JP); YAGISHITA, Sadahiro, Osaka 559-0025 (JP)
(74) Representative: Jones, Helen M.M.
(86) International application number: PCT/JP2007/066363
(87) International publication number: WO 2008/023761

(57) **Abstract**

Provided are a complex oxide useful as a catalyst that has superior heat resistance and is able to remove a nitrogen oxide in the presence of ammonia; a method for producing the same; a nitrogen-oxide removal catalyst, which contains the complex oxide as an active ingredient; a method for removing a nitrogen oxide using the same; and an apparatus including the catalyst. The complex oxide containing cerium oxide, titanium oxide, zirconium oxide, and sulfate (sulfate ion: SO₄²⁻) and having the cerium oxide content of 15 to 30 percent by weight and the sulfate content of 1.6 percent by weight or more, is superior in catalytic activity (ability to remove a nitrogen oxide in the presence of ammonia) and thermal stability. Accordingly, a complex oxide that is composed of cerium oxide, titanium oxide, zirconium oxide, and sulfate and have the cerium oxide content of 15 to 30 percent by weight and the sulfate content of 1.6 percent by weight or more is useful for removing a nitrogen oxide.

## Description

### Cross Reference with Related Document

The present application claims the benefit of Japanese Patent Application No. 2006-229328 filed on August 25, 2006, the entire contents of which are incorporated herein by reference.

### Technical Field

The present invention relates to a complex oxide that is useful for removing a nitrogen oxide in the presence of ammonia; a method for producing the same; a nitrogen-oxide removal catalyst, which contains the complex oxide as an active ingredient; a method for removing a nitrogen oxide using the same; and an apparatus including the catalyst.

### Background Art

Nitrogen-oxide removal catalysts in the presence of ammonia have been developed, as shown in formulas (1) and (2) below. For example, there were disclosed a catalyst containing titania, zirconia, and a metal such as a rare-earth metal as active ingredients (Japanese Patent Application Laid-open Publication No. 2005-238196; PCT International Application Publication WO 05/082494); a catalyst including cerium oxide (preferably in a content of 0.01 to 30 percent by weight) as a catalytic component loaded on a carrier, in which the carrier is composed of a refractory inorganic oxide containing a complex oxide of titania and zirconia (Japanese Patent Application Laid-open Publication No. Hei02-229547); and a catalyst including a catalytic material loaded on a honeycomb substrate, in which the catalytic material contains 50 to 94.5 percent by weight of titanium oxide, 5 to 30 percent by weight of tungsten oxide, 0.5 to 10 percent by weight of cerium oxide, and 0 to 10 percent by weight of zirconium oxide (Japanese Patent Application Laid-open Publication No. Hei11-342334).

Formula (1) : NO₂ + 2NH₃ + 1/2O₂ → 3/2N₂ + 3H₂O

Formula (2) : NO + NH₃ + 1/4O₂ → N₂ + 3/2H₂O

### Disclosure of Invention

### Problems to be Solved by the Invention

Although various complex oxides as nitrogen-oxide removal catalysts have been developed as described above, development of a complex oxide useful as a catalyst that has superior heat resistance and is able to remove a nitrogen oxide more efficiently is desired under the present circumstances.

Object of the present invention is to provide a complex oxide useful as a catalyst that has superior thermal stability and is able to remove a nitrogen oxide in the presence of ammonia; a method for producing the same; a nitrogen-oxide removal catalyst, which contains the complex oxide as an active ingredient; a method for removing a nitrogen oxide using the same; and an apparatus including the catalyst.

### Means for Solving the Problems

The inventors of the present invention found that a complex oxide containing cerium oxide, titanium oxide, zirconium oxide, and sulfate (sulfate ion: SO₄²⁻) exhibited superior catalytic activity (ability to remove a nitrogen oxide in the presence of ammonia) and superior thermal stability when the complex oxide contains 15 to 30 percent by weight of the cerium oxide and 1.6 percent by weight or more of the sulfate. The present invention has been made based on this finding.

That is, a complex oxide according to the present invention contains cerium oxide, titanium oxide, zirconium oxide, and sulfate, in which the complex oxide has the cerium oxide content of 15 to 30 percent by weight and the sulfate ion content of 1.6 percent by weight or more. The complex oxide according to the present invention preferably has an ammonia adsorptivity of 0.5 µmol/g or more. The complex oxide preferably has a BET specific surface area of 75 m²/g or more.

A nitrogen-oxide removal catalyst according to the present invention is a nitrogen-oxide removal catalyst in the presence of ammonia and contains the complex oxide as an active ingredient. The nitrogen-oxide removal catalyst may be in the form of a powder of the complex oxide or may include the complex oxide loaded on a honeycomb carrier.

A method for removing a nitrogen oxide according to the present invention includes the step of bringing a nitrogen oxide and ammonia into contact with the nitrogen-oxide removal catalyst for denitration by reduction.

An apparatus for removing a nitrogen oxide according to the present invention includes the above nitrogen-oxide removal catalyst.

A method for preparing a complex oxide according to the present invention includes a step of adding ammonia to an aqueous solution containing a cerium salt, a titanium salt, and a zirconium sulfate to adjust its pH within the range of 7.5 to 12.0; a step of collecting a precipitate that has been generated in the aqueous solution by adjusting the pH; and a step of firing the collected precipitate at a temperature of 400°C to 600°C.

### Brief Description of Drawings

[Fig. 1] Fig. 1 is a view showing the results of the change in nitrogen-oxide removal rate with the concentration of cerium oxide contained in a Ce-Ti-Zr-SO₄ based complex oxide, according to one example of the present invention.
[Fig. 2] Fig. 2 is a view showing the results of the change in nitrogen-oxide removal rate with the concentration of sulfate contained in a Ce-Ti-Zr-SO₄ based complex oxide in which cerium oxide is contained at a preferable concentration, according to one example of the present invention.
[Fig. 3] Fig. 3 is a view showing the results of the change in nitrogen-oxide removal rate with a BET specific surface area of Ce-Ti-Zr-SO₄ based complex oxide, according to one example of the present invention.

### Best Mode for Carrying Out the Invention

Embodiments for carrying out the present invention which was made based on the above findings will be described in detail with reference to examples. In the following description, "zirconium oxide (zirconia)" means a regular zirconium oxide and may refer to one containing 10 percent by weight or less of a metallic compound (such as hafnia) as an impurity.

### === Complex oxide according to the present invention ===

As demonstrated in Examples 1, 2, and 3, a complex oxide containing cerium oxide, titanium oxide, zirconium oxide, and sulfate (sulfate ion: SO₄²⁻) and having the cerium oxide content of 15 to 30 percent by weight and the sulfate content of 1.6 percent by weight or more is useful as a nitrogen-oxide removal catalyst, because it is highly thermally stable and is able to remove a nitrogen oxide in the presence of ammonia efficiently.

A nitrogen-oxide removal catalyst, which contains the complex oxide as an active ingredient, is useful in a method for removing a nitrogen oxide by bringing ammonia into contact with the nitrogen oxide to remove the nitrogen oxide, and in an apparatus for removing a nitrogen oxide, especially a nitrogen oxide that generates when fuel, such as diesel oil or coal, burns. An exemplary apparatus herein is a muffler with the nitrogen-oxide removal catalyst. In order to remove a nitrogen oxide, the presence of ammonia is necessary in a reaction field (region in which the nitrogen-oxide removal catalyst and a nitrogen oxide are both present), and for this purpose, a denitration reducing agent may be added (charged) to the reaction field. As the denitration reducing agent, for example, an ammonia source, such as ammonia, aqueous ammonia (ammonia in water), or liquefied ammonia, may be used; however, in consideration of environment and the like, an ammonia precursor capable of generating ammonia is preferably used. As the ammonia precursor, for example, urea, a urea aqueous solution, or the like capable of generating ammonia by pyrolysis may be used.

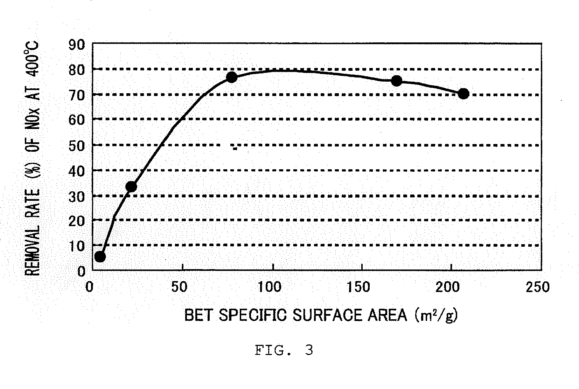

The nitrogen-oxide removal catalyst may contain, as an active ingredient, a powdered complex oxide that has been pulverized with a known pulverizer such as an atomizer or a pin mill. Alternatively, it may be a powdery complex oxide loaded on a carrier substrate (such as a honeycomb or a porous carrier substrate). A complex oxide having a BET specific surface area of 75 to 250 m²/g is preferably used as the catalyst, because a complex oxide having a BET specific surface area of less than 75 m²/g may not work efficiently to remove a nitrogen oxide; and a complex oxide having a BET specific surface area of more than 250 m²/g may make the nitrogen-oxide removal efficiency decrease (see Fig. 3). The complex oxide for use herein is preferably one having the titanium oxide concentration of 25 to 30 percent by weight, because such a complex oxide can remove a nitrogen oxide efficiently in the presence of ammonia. A nitrogen-oxide removal catalyst can be supported by a carrier substance according to a known procedure.

Further, the complex oxide according to the present invention is preferably a complex metal oxide containing cerium oxide, titanium oxide, and zirconium oxide in which sulfate is incorporated, instead of a complex metal oxide containing cerium oxide, titanium oxide, and zirconium oxide in which sulfate is loaded on the complex metal oxide. The incorporation of sulfate into the complex metal oxide gives a complex oxide that is able to adsorb ammonia gas satisfactorily and has superior heat resistance.

The content of sulfate contained in the complex oxide according to the present invention is not particularly limited, as long as being 1.6 percent by weight or more, but is preferably 1.6 to 20 percent by weight, more preferably 2 to 10 percent by weight, and most preferably 2 to 6 percent by weight. The complex oxide containing sulfate may efficiently adsorb ammonia gas at its active sites (acid sites) and remove a nitrogen oxide (NOₓ) efficiently, acting as a kind of solid acid. A complex oxide having the sulfate content of less than 1.6 percent by weight may not have acid sites enough to adsorb ammonia sufficiently, and thus is undesirable. In contrast, a complex oxide having the sulfate content of more than 20 percent by weight is not economically desirable, because the ammonia adsorptivity reaches equilibrium.

The complex oxide preferably has an ammonia adsorptivity of 0.5 µmol/g or more, and more preferably has an ammonia adsorptivity of 1 to 3 µmol/g or more. Such a complex oxide having high ammonia adsorptivity is able to remove a nitrogen oxide efficiently in the presence of ammonia.

### === Production of complex oxide according to the present invention ===

The complex oxide according to the present invention can be produced, for example, by adding ammonia to an aqueous solution containing a cerium salt (10 to 30 percent by weight in the form of cerium oxide), a titanium salt, and a zirconium sulfate to adjust its pH within the range of 7.5 to 12.0; collecting the obtained precipitate through a solid-liquid separation method such as a filtration method; and firing the collected precipitate at a temperature of 400°C to 600°C in oxygen-containing gas (such as in normal atmosphere, in oxygen gas, or in a gaseous mixture of oxygen and nitrogen) for a suitable duration (from 1 to 10 hours).

Exemplary usable zirconium salts include zirconium sulfates (Zr(SO₄)₂, ZrOSO₄), and basic zirconium sulfates. Among them, basic zirconium sulfates are preferably used because of easy preparation. Exemplary usable basic zirconium sulfates include ZrOSO₄ • ZrO₂, 5ZrO₂ • 3SO₃, and 7ZrO₂ • 3SO₃. Each of these can be used alone or in combination.

The basic zirconium sulfates can be prepared by, for example, mixing a solution of zirconium salt with a sulfating agent and then heating the mixture. The solution of zirconium salt for use herein can be prepared by dissolving a zirconium salt in a solvent. The zirconium salt is not particularly limited, as long as being able to supply zirconium ion, and, for example, one or more of zirconium oxynitrate, zirconium oxychloride, zirconium nitrate, and the like can be used. Among them, zirconium oxychloride is preferably used because of its superior productivity in commercial scale.

The solvent may be suitably selected typically according to the type of zirconium salt to be used, but is preferably water (more preferably pure water or ion-exchanged water) in general. The concentration of the solution of zirconium salt used in the preparation of the basic zirconium sulfates, is not particularly limited, is preferably the concentration in which the solution contains 5 to 200 g, and is more preferably the concentration in which the solution contains 50 to 100 g, of zirconium oxide (ZrO₂) in 1000 g of the solvent.

The sulfating agent is not particularly limited, as long as being able to react with zirconium ion to form a sulfate (that is, being able to carry out sulfation). Exemplary sulfating agents include sulfuric acid, sodium sulfate, and ammonium sulfate. The sulfating agent may be in any form such as powdery or solution form, but it is preferably in the form of a solution (more preferably in the form of an aqueous solution). When the sulfating agent is used in the form of a solution, its concentration may be suitably set. It is preferred to mix the sulfating agent with the solution of zirconium salt so that the molar ratio of SO₄²⁻ to ZrO₂ is from 0.4 to 0.6; thus, the free acid concentration in the resulting mixture becomes 0.2 to 2.2 N (normality). The preferred molar ratio of SO₄²⁻ to ZrO₂ is herein set to be from 0.4 to 0.6, because a ratio less than 0.4 may not give a sufficient amount of sulfate salt; and a ratio more than 0.6 requires a larger amount of sulfuric acid and this may adversely affect the productivity. The free acid is not particularly limited and examples thereof include sulfuric acid, nitric acid, and hydrochloric acid. Hydrochloric acid is the most preferred for superior productivity in commercial scale.

The mixture of the sulfating agent and the solution of zirconium salt is heated preferably at 65°C or higher, and more preferably at 70°C or higher. Heating at a temperature lower than 65°C may not induce a reaction for the formation of a basic zirconium sulfate.

The aqueous solution of a cerium salt, a titanium salt, and a zirconium sulfate may be prepared by mixing a cerium salt and a titanium salt with a solution of basic zirconium sulfate which has been prepared according to the method described above. Alternatively, it may be prepared by subjecting the solution of basic zirconium sulfate to a treatment such as filtration and rinsing with water, and then mixing the obtained solution, together with a cerium salt and a titanium salt, with a solvent.

The concentrations of cerium salt, titanium salt, and zirconium sulfate in the mixture are not particularly limited, but are preferably as follows:
Zirconium sulfate: 50 to 200 g/l in the form of ZrO₂
Titanium salt: 100 to 300 g/l in the form of TiO₂
Rare-earth metal salt: 200 to 400 g/l in the form of R₂O₃, in which R is a rare-earth metal
Free acid: 0.1 to 2.0 N (normality)

Exemplary usable cerium salts include inorganic acid salts of cerium, such as a nitrate, a sulfate, and a chloride of cerium; and organic acid salts of cerium, such as an acetate and an oxalate of cerium. Among them, cerium nitrate is preferably used because of its superior productivity in commercial scale. More specifically, cerium nitrate, cerium chloride, cerium sulfate, ammonium nitrate, and the like or a mixture of two or more of them can be used.

Exemplary titanium salts include inorganic acid salts of titanium, such as a nitrate, a sulfate, and a chloride of titanium, and oxy-salts of titanium; and organic acid salts of titanium, such as titanium oxalate. Among them, titanium chloride is preferably used because of its superior productivity in commercial scale. More specifically, titanium nitrate, titanium sulfate, titanium tetrachloride, titanium oxychloride, titanium oxysulfate, titanium oxalate, and the like or a mixture of two or more of them can be used.

The free acid is not particularly limited and can be, for example, sulfuric acid, nitric acid, or hydrochloric acid. Hydrochloric acid is preferably used for satisfactory productivity in commercial scale.

The pH of the aqueous solution adjusted with ammonia is set to be 7.5 to 12.0, and preferably 9 to 11.5 as described above. This is because an aqueous solution having a pH of less than 7.5, does not give Ce(III) as a hydroxide precipitate and thus the yield decreases; and the content of sulfate is not satisfactorily controlled in the aqueous solution and an aqueous solution having a pH of more than 12.0 requires excessive ammonia, which is economically undesirable.

The pH adjustment may be carried out by using a basic agent other than ammonia (such as sodium hydroxide), but is preferably carried out by using ammonia (each of compounds that will form ammonia as a result of being heated may be used alone or in combination). This enables efficient preparation of a complex oxide that can adsorb ammonia gas satisfactorily and have superior thermal stability (see Example 3).

In the above description, the firing temperature is set to be 400°C to 600°C. This is because zirconium hydroxide does not crystallize in firing at a temperature lower than 400°C and sulfate begins to decompose in firing at a temperature higher than 600°C, and the resulting product has a BET specific surface area of less than 75 m²/g and thereby does not sufficiently remove a nitrogen oxide.

According to this embodiment, a precipitate (hydroxide) precipitated as a result of pH adjustment with ammonia is to be fired. Where necessary, the precipitate may be subjected to a treatment such as rinsing with water and/or drying before firing.

The prepared complex oxide is then pulverized to a particle diameter of 0.5 to 20.0 µm with a known pulverizer such as an atomizer or a pin mill, which yields a complex oxide having a BET specific surface area of 75 m²/g or more.

### Examples

Hereinafter, the present invention will be specifically described with reference to the examples. However, the aim of the following examples is to explain the present invention and the examples do not limit the scope of the invention.

### [EXAMPLE 1]

A series of solutions was prepared by mixing 15 to 35 g of solution of zirconium sulfate (20 percent by weight in the form of ZrO₂), 15 to 20 g of solution of titanium chloride (20 percent by weight in the form of TiO₂), and 5 to 25 g of solution of cerium nitrate (20 percent by weight in the form of CeO₂) with 1 liter of water for dilution. After that, a series of powdery complex oxides was prepared by adding a basic solution (aqueous ammonia) to each of the solutions to adjust its pH in the range of 7.5 to 12.0, collecting the obtained precipitates by filtration, firing the collected precipitates at a temperature of 400°C to 1000°C, and pulverizing the fired products.

The components of metal oxides and the concentrations of sulfate in the prepared complex oxides were measured by a fluorescent x-ray analytical method (component measurement method for the various metal oxides by RIX3100 manufactured by Rigaku Corporation) and by a combustion-infrared spectroscopic method (concentration measurement method for the sulfate by EMIA-520 manufactured by Horiba Ltd.). In addition, by using a flow-type specific surface area automatic analyzer, Flowsoap Model 2300 (manufactured by Shimadzu Corporation), the BET specific surface areas of each of catalysts were measured.

The results are shown in Table 1.

**Table 1**

| COMPLEX OXIDE | CeO₂ CONCENTRATION (wt%) | TiO₂ CONCENTRATION (wt%) | ZrO₂ CONCENTRATION (wt%) | SO₄²⁻ CONCENTRATION (wt%) | BET SPECIFIC SURFACE AREA (m²/g) |
|---|---|---|---|---|---|
| No.1 | 7.6 | 28.3 | 63.6 | 0.5 | 217 |
| No.2 | 14.7 | 27.6 | 56.9 | 0.8 | 233 |
| No.3 | 21.6 | 27.4 | 49.5 | 1.6 | 234 |
| No.4 | 28.4 | 26.5 | 43.2 | 1.9 | 173 |
| No.5 | 41.2 | 26.2 | 30.8 | 1.9 | 145 |
| No.6 | 22.7 | 27.9 | 49.4 | 0 | 174 |
| No.7 | 22.3 | 27.8 | 49.3 | 0.7 | 181 |
| No.8 | 22.1 | 27.4 | 48.6 | 1.9 | 197 |
| No.9 | 21.6 | 26.9 | 47.5 | 3.9 | 199 |
| No.10 | 21.2 | 26.5 | 46.9 | 5.4 | 183 |
| No.11 | 23.4 | 28.3 | 48.2 | 0.1 | 4 |
| No.12 | 23.3 | 28.1 | 48.0 | 0.5 | 22 |
| No.13 | 22.9 | 27.6 | 47.1 | 2.4 | 78 |
| No.14 | 22.9 | 27.6 | 47.1 | 2.4 | 169 |
| No.15 | 22.9 | 27.6 | 47.2 | 2.3 | 207 |

### [EXAMPLE 2]

Using honeycomb-shaped catalysts (•: Fresh) prepared by loading each of the powdery complex oxides Nos. 1 to 15 manufactured in Example 1 on respective honeycomb carriers (cell structure: 6 mil/400 cpsi) or honeycomb-shaped catalysts (▲: 750°C×3H) prepared by loading each of the powdery complex oxides Nos. 2 to 10 on respective honeycomb carriers (cell structure: 6 mil/400 cpsi) and heating at 750°C for 3 hours, a denitration reaction test was performed under the following conditions. A simulation gas containing 500 ppm of NO, 500 ppm of NH₃, 10% of O₂, 5% of H₂O, and the balance being N2 was used, a space velocity (SV) was set to 50,000/h, and the reaction temperature was set to 400°C.

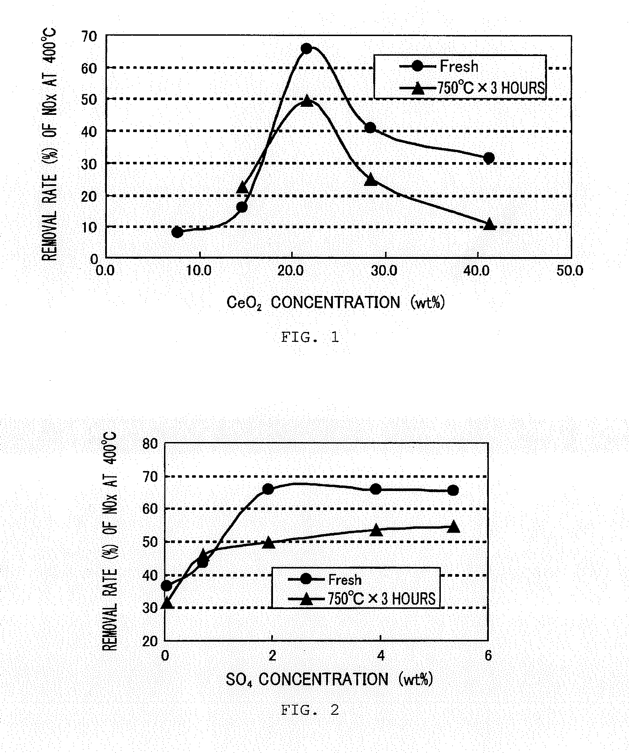

The results are shown in Table 2 and Figs. 1 to 3.

**Table 2**

| COMPLEX OXIDE | NITROGEN-OXIDE REMOVAL RATE (%) AT 400°C | |
|---|---|---|
| | Fresh | 750°C × 3 HOURS |
| No.1 | 8 | |
| No.2 | 16 | 22 |
| No.3 | 66 | 50 |
| No.4 | 41 | 25 |
| No.5 | 31 | 11 |
| No.6 | 36 | 32 |
| No.7 | 43 | 46 |
| No.8 | 66 | 49 |
| No.9 | 66 | 54 |
| No.10 | 65 | 55 |
| No.11 | 5 | |
| No.12 | 33 | |
| No.13 | 76 | |
| No.14 | 75 | |
| No.15 | 70 | |

As shown in Table 2 and Fig. 1, it was found that complex oxides composed of cerium oxide, titanium oxide, zirconium, and sulfate (Ce-Ti-Zr-SO₄ based complex oxides), when having the cerium oxide concentration of 15 to 30 percent by weight, showed high initial catalytic activities (high removal rates of NOₓ by the catalysts in the Fresh state), and had superior heat resistance because they showed superior catalytic activities even after heat treatment at 750°C for 3 hours. In addition, as shown in Table 2 and Fig. 2, it was found that Ce-Ti-Zr-SO₄ based complex oxides containing cerium oxide in preferred concentrations (20 to 23 percent by weight), when having the sulfate content of at least 1.6 percent by weight or more, showed higher initial catalytic activities and had more superior heat resistance. Further, as shown in Table 2 and Fig. 3, it was found that the complex oxides, when having the BET specific surface area of 75 m²/g or more, showed high catalytic activities.

From the results, Ce-Ti-Zr-SO₄ based complex oxides containing 15 to 30 percent by weight of cerium oxide and 1.6 percent by weight or more of sulfate have high catalytic activities and are highly durable against heat. Ammonia adsorptivities of the complex oxides were measured respectively by ammonia TPD measurement with an instrument TPD-1-AT manufactured by BEL JAPAN, INC. and the complex oxides containing 1.6 percent by weight or more of sulfate had an ammonia adsorptivity of 0.5 µmol/g or more.

### [EXAMPLE 3]

A sulfating agent was prepared as a solution of 9 g of sulfuric acid (100 percent by weight in the form of SO₄²⁻) and 51 g of powdery Na₂SO₄ dissolved in 742 g of ion-exchanged water. The sulfating agent (802 g) was mixed with 488.9 g of zirconium oxychloride solution containing 100 g in the form of ZrO₂. The mixture was heated to 70°C to start sulfation and further heated to 98°C, which yielded 1290.9 g of slurry containing a basic zirconium sulfate.

To 916.5 g (71 g in the form of ZrO₂) of the basic zirconium sulfate slurry were added 262.5 g (40 g in the form of TiO₂) of titanium tetrachloride solution and 158.3 g (32 g in the form of Ce₂O₃) of cerium nitrate solution, and the mixture was diluted with 1662.7 g of ion-exchanged water to prepare a mixture having the concentration of the total oxides of about 5 percent by weight.

25% aqueous ammonia was added to the prepared mixture to adjust its pH to 7.5 or more (pH = 11.5). After that, the mixture was filtrated on a Buchner funnel, and the residue was rinsed with 2000 g of ion-exchanged water. The rinsed residue (hydroxide) was fired at 500°C in the atmosphere for 5 hours and pulverized, which yielded 150 g of Oxide I having the average particle diameter of 13.7 µm. The sulfate content of Oxide I was measured by the method described in Example 1 and found to be 5.1 percent by weight.

Another oxide was prepared by adjusting the pH of the mixture to 7.5 or more (pH of 13.5) following the method described above, except for using 900 g of 25% sodium hydroxide aqueous solution as a basic solution to adjust the pH. The sulfate of the oxide was analyzed by the method described in Example 1 and found to be 0.10 percent by weight. The oxide was impregnated with 25 g of 25% ammonium sulfate aqueous solution, dried at 200°C for 24 hours and pulverized, which yielded Oxide II having the average particle diameter of 13.7 µm and sulfate loaded on the oxide. The sulfate of Oxide II was analyzed by the method described in Example 1 and found to be 3.9 percent by weight.

Oxides I and II were subjected to compositional analysis by a fluorescent x-ray analytical method; specific surface area measurement according to the BET method with a specific surface area analyzer ("FlowSorp II" manufactured by Micromeritics); TG-DTA measurement with an instrument Thermo Plus2 TG8120 (manufactured by Rigaku Corporation); and ammonia TPD measurement with the instrument TPD-1-AT.

The results are shown in Table 3.

**Table 3**

| | Oxide I | Oxide II |
|---|---|---|
| ZrO₂ (%) | 47. 0 | 47. 7 |
| CeO₂ (%) | 21. 3 | 21. 5 |
| TiO₂ (%) | 26. 6 | 26. 9 |
| SO₄²⁻ (%) | 5. 1 | 3. 9 |
| SPECIFIC SURFACE AREA(m²/g) | 182. 8 | 102. 1 |
| SO₄²⁻ DESORPTION TEMPERATURE (°C) | 598 | 454 |
| AMMONIA ADSORPTIVITY (µmol/g) | 1. 4 | 0. 2 |

As shown in Table 3, it was found that Oxide I had a much higher SO₄²⁻ desorption temperature than Oxide II had and was superior in thermal stability to Oxide II. This indicates that a complex metal oxide containing cerium oxide, titanium oxide, and zirconium oxide, if loading sulfate, has a lower SO₄²⁻ desorption temperature.

As shown in Table 3, it was found that Oxide I had a much higher ammonia adsorptivity than Oxide II had. This indicates that factors such as sulfate content and SO₄²⁻ desorption temperature are important to improve an adsorptivity of ammonia gas.

From the results, complex oxides that are able to adsorb ammonia gas satisfactorily and are highly durable against heat can be obtained not by allowing complex metal oxides containing cerium oxide, titanium oxide, and zirconium oxide to load sulfate, but by preparing the mixture using a zirconium sulfate so as to incorporate sulfate into the complex metal oxides, and adjusting the pH of the mixture with ammonia.

### Industrial Applicability

According to the present invention, there are provided a complex oxide useful as a catalyst that has superior heat resistance and is able to remove a nitrogen oxide in the presence of ammonia; a method for producing the same; a nitrogen-oxide removal catalyst, which contains the complex oxide as an active ingredient; a method for removing a nitrogen oxide using the same; and an apparatus including the catalyst.

## Claims

1. A complex oxide comprising cerium oxide, titanium oxide, zirconium oxide, and sulfate, wherein the complex oxide has the cerium oxide content of 15 to 30 percent by weight and the sulfate content of 1.6 percent by weight or more.

2. The complex oxide according to claim 1, wherein the complex oxide has an ammonia adsorptivity of 0.5 µmol/g or more.

3. The complex oxide according to claims 1 or 2, wherein the complex oxide has a BET specific surface area of 75 m²/g or more.

4. A nitrogen-oxide removal catalyst in the presence of ammonia, comprising the complex oxide according to any of claims 1 to 3 as an active ingredient.

5. The nitrogen-oxide removal catalyst according to claim 4, wherein the complex oxide is loaded on a honeycomb carrier.

6. A method for removing a nitrogen oxide, comprising bringing a nitrogen oxide and ammonia into contact with the nitrogen-oxide removal catalyst according to claims 4 or 5 for denitration by reduction.

7. An apparatus for removing a nitrogen oxide, comprising the catalyst according to claims 4 or 5.

8. A method for producing a complex oxide, comprising:
adding ammonia to an aqueous solution containing a cerium salt, a titanium salt, and a zirconium sulfate to adjust the pH of the aqueous solution within the range of 7.5 to 12.0;
collecting a precipitate that has been generated in the aqueous solution by adjusting the pH; and
firing the collected precipitate at a temperature of 400°C to 600°C.
